(19) Europäisches Patentamt
European Patent Office
Office européen des brevets

(11) Veröffentlichungsnummer: **0 044 470**
**B1**

(12) **EUROPÄISCHE PATENTSCHRIFT**

(45) Veröffentlichungstag der Patentschrift: **15.06.83**

(51) Int. Cl.³: **C 07 F 9/53**, C 04 B 11/14, C 04 B 31/30

(21) Anmeldenummer: **81105320.6**

(22) Anmeldetag: **09.07.81**

(54) **Dimethylphosphinyl-alkanphosphonsäuren, ein Verfahren zu ihrer Herstellung und ihre Verwendung als Gipsabbindeverzögerer.**

(30) Priorität: **17.07.80 DE 3027040**

(43) Veröffentlichungstag der Anmeldung: **27.01.82 Patentblatt 82/4**

(45) Bekanntmachung des Hinweises auf die Patenterteilung: **15.06.83 Patentblatt 83/24**

(84) Benannte Vertragsstaaten: **AT BE CH DE FR GB IT LI NL**

(56) Entgegenhaltungen:
**EP-A-0 000 061**
**DE-A-2 523 145**
**DE-A-2 647 042**
**US-A-3 646 133**
**CHEMICAL ABSTRACTS, Band 82, 1975, Seite 452, Nr. 43520e Columbus, Ohio, U.S.A. M. I. KABACHNIK et al.: »Synthesis and properties of some ethylenediphosphoryl compounds«**

(73) Patentinhaber: **HOECHST AKTIENGESELLSCHAFT, Postfach 80 03 20, D-6230 Frankfurt/Main 80 (DE)**

(72) Erfinder: **Kleiner, Hans-Jerg, Dr., Altkönigstrasse 11a, D-6242 Kronberg (DE)**
Erfinder: **Knittel, Volker, Dr., Heinrich-Zille-Strasse 36, D-6200 Wiesbaden (DE)**
Erfinder: **Debus, Gerhard, Frankenthalstrasse 20, D-6220 Rüdesheim-Assmannshausen (DE)**

**EP 0 044 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Dimethylphosphinyl-alkanphosphonsäuren, ein Verfahren zu ihrer Herstellung und ihre Verwendung als Gipsabbindeverzögerer

Die Erfindung betrifft Dimethylphosphinyl-alkanphosphonsäuren, ein Verfahren zur Herstellung dieser Verbindungen und ihre Verwendung als Abbindeverzögerer in Gips oder in gipshaltigen Gemischen.

Substituierte oder unsubstituierte Alkanphosphon- und Dialkylphosphinsäuren spielen seit längerer Zeit eine wichtige Rolle als Vor-, Zwischen- und Endprodukte auf zahlreichen Sachgebieten, beispielsweise als Komplexbildner, Pflanzenschutzmittel, Textilhilfsmittel, Antistatika, Flammschutzmittel, Korrosionsschutzmittel, Weichmacher für Kunststoffe oder Flotationshilfsmittel; auch ihr Einsatz als Gipsabbindeverzögerer ist bereits vorgeschlagen worden.

Als flammhemmende Komponente in Polyamidformmassen ist beispielsweise (Dimethylphosphinyl-methyl)-methyl-phosphinsäure

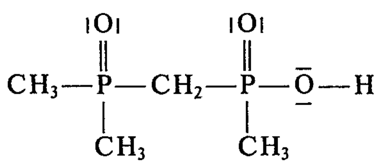

zu nennen [s. die weiter unten ausführlich dargestellte DE-OS 2 523 145 (= US-PS 4 062 828)]. Zu den bereits bekannten Gipsabbindeverzögerern gehört auch die 3,3-Diphosphono-pimelinsäure,

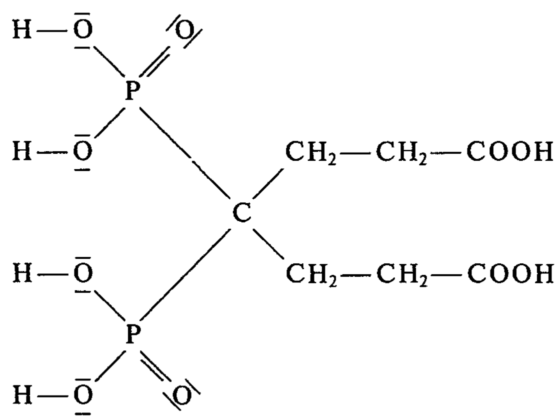

die in der weiter unten aufgeführten DE-OS 2 647 042 beschrieben wird.

Zu den für die vorliegende Erfindung relevanten Anwendungsgebieten zählt insbesondere das Einsatzgebiet als Gipsabbindeverzögerer. Als Gipse werden anorganisch-mineralische Stoffe bezeichnet, die zu mindestens 50 Gew.-% aus Dehydrationsprodukten des Calciumsulfat-Dihydrats bestehen und denen verschiedenste Zusätze beigemischt sein können (s. dazu beispielsweise »Baugipse«, DIN-Norm 1168, Blatt 1 vom Mai 1975 und Teil 2 vom Juli 1975 oder F. Graf und F. Rausch, »Gipshilfsprodukte, ihre Anwendung und Wirkung« in Zement-Kalk-Gips, Bau Verlag - Wiesbaden, Heft 5, Heft 5-1951, Seiten 1 bis 7). Mit Wasser angerührt ergeben Gipse eine allmählich erstarrende Masse (=Abbinden), die einen festen Zusammenhalt hat; in der Praxis spielt dabei die Abbindegeschwindigkeit der Gipsmassen eine zentrale Rolle, da diese naturgemäß die Verarbeitungseigenschaften und die Verarbeitungszeit beeinflußt.

Zu den aus dem Stand der Technik bekannten Verbindungen, welche die Abbindegeschwindigkeit (-zeit) des mit Wasser angerührten Gipses verzögern, gehören neben organischen Polymeren wie Casein und Gelatine auch organische Carbonsäuren wie Citronensäure, Äpfelsäure und Weinsäure oder anorganische Säuren wie Borsäure und Phosphorsäure, auch der Einsatz von entsprechenden Salzformen ist bekannt. Ebenfalls sind organische Phosphorverbindungen bereits im relevanten Schrifttum als Gipsabbindeverzögerer beschrieben worden.

Aus dem Stand der Technik sind dazu beispielsweise die folgenden Druckschriften bekannt, die Verfahren zur Herstellung solcher Verbindungen, die Verbindungen selbst und/oder deren Anwendungsgebiete beschreiben:

In der DE-PS 2 441 783 (=US-PS 4 069 247) wird ein Verfahren zur Herstellung von Phosphon- und/oder Phosphinsäuren durch hydrolytische Spaltung von Phosphon- und/oder Phosphinsäurealkylestern (Alkylrest ab 2 C-Atomen) bei Temperaturen von 170° bis 300°C unter Einsatz von mindestens der stöchiometrisch für die Hydrolyse erforderlichen Menge Wasser beschrieben, wobei das als eines der Hydrolyseprodukte gebildete Alkanol durch Destillation aus dem Reaktionsgemisch entfernt wird. Die Reaktion wird so durchgeführt, daß sie in Gegenwart von mindestens 2 Gew.-% der Säure

beginnt; typische Edukte für dieses Verfahren sind n-Butanphosphonsäuredi-n-butylester oder Methyl-ethylphosphinsäure-ethylester, aus denen dann die entsprechenden Säuren entstehen:

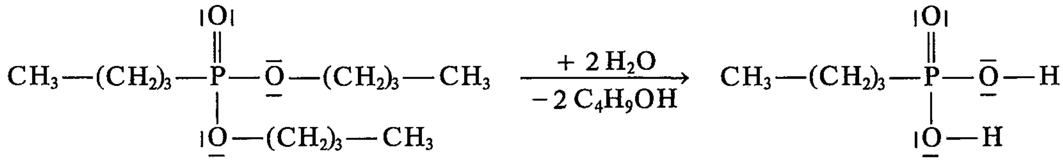


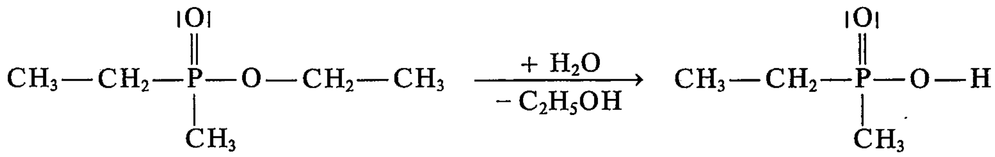


Das Verfahren gemäß der DE-PS 2 441 878 (=US-PS 4 069 245) unterscheidet sich von dem vorher beschriebenen dadurch, daß als Ausgangsstoff ein Phosphon- und/oder Phosphinsäuremethylester eingesetzt wird und die Temperatur während der Reaktion 160° bis 250° C beträgt.

Aus der DE-OS 2 719 385 ist ein Verfahren zur Herstellung von Phosphon- und Phosphinsäuren durch acidolytische Spaltung von deren Alkylestern bekannt, wibei mindestens die zu den Alkylestergruppen äquivalente Menge einer Alkyl-, Alkenyl-, Cycloalkyl- oder Phenylcarbonsäure oder Ameisensäure, gegebenenfalls in Gegenwart katalytischer Mengen starker Säuren oder Basen, zum Einsatz kommt. Die Reaktion wird bei 100°C bis 200°C durchgeführt, und es wird der als eines der Produkte der acidolytischen Spaltung entstehende Carbonsäurealkylester durch Destillation aus dem Reaktionsgemisch entfernt; typische Edukte für dieses Verfahren sind Carboethoxy-methanphosphonsäure-diethylester oder Methandiphosphonsäure-tetraethylester, aus denen mit beispielsweise Essigsäure dann die entsprechenden Säuren entstehen:

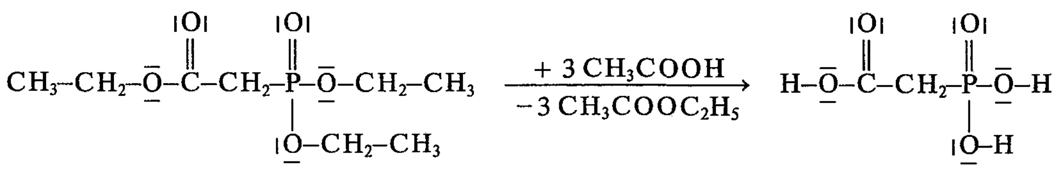


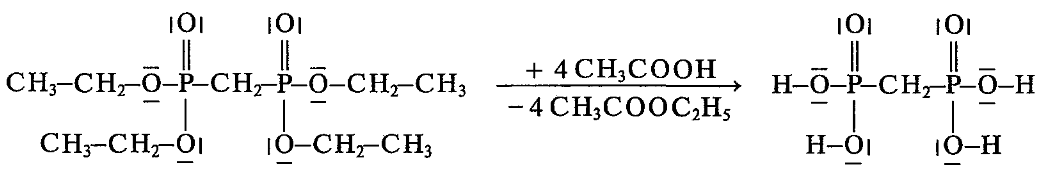


In der US-PS 3 646 133 werden Anhydride von organischen Alkyliden-phosphonyl-phosphinoxiden (oder Phosphinyl-alkanphosphonsäuren) beschrieben, deren freie Säuren u. a. durch die allgemeine Formel

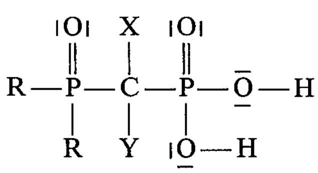

beschrieben werden können, wobei R u. a. ein Alkylrest von $C_1$ bis $C_{18}$ ist; X und Y bedeuten Wasserstoff oder Alkylgruppen von $C_1$ bis $C_6$. Zu den konkret genannten Verbindungen zählt (Beispiel 10) auch die Diethylphosphinyl-methanphosphonsäure als Verbindung mit der niedrigsten Anzahl von C-Atomen im Rest R. Der in Spalte 4, Zeilen 49/50, der US-PS gegebene Hinweis auf drei Kurzmittelungen von L. Maier in Angew. Chem., 80. Jahrgang 1968, Nr. 10, Seiten 400–402 (=Angew. Chem. intern. Edit. 7, Nr. 5, Seiten 384–386) über organische Alkyliden-phosphonyl-phosphinoxide ergibt jedoch keine Information über Monophosphonyl-phosphinoxide (=Phosphinyl-phosphonsäuren), sondern nur über Di- und Triderivate.

Aus M. I. Kabachnik, T. Y. Medved', I. B. Goryunova, L. I. Tikhonova und E. I. Matrosov in Zsv. Akad. Nauk. SSSR, Ser. Khim. 1974, 10, Seiten 2290 bis 2295, ist die Umsetzung von Diethylphosphinoxid mit Vinylphosphonsäure-diethylester bekannt, wonach sich eine saure Hydrolyse des dabei entstehenden Phosphinyl-ethanphosphonsäureesters zur 2-Diethylphosphinyl-ethanphosphonsäure anschließen

kann.

In der DE-OS 2 523 145 (=US-PS 4 062 828) wird eine schwerentflammbare Polyamidformmasse beschrieben, die als flammhemmende Komponente Phosphinylphosphinsäuren enthält, die durch die folgende allgemeine Formel wiedergegeben werden

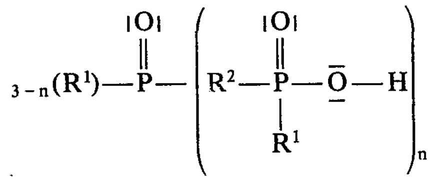

in der $R^1$ Alkylreste von $C_1$ bis $C_{16}$, Arylreste oder Aralkylreste von $C_6$ bis $C_{16}$, $R^2$ Alkylengruppen von $C_1$ bis $C_8$ oder Arylengruppen und n eine ganze Zahl von 1 bis 3 bedeuten; typische Vertreter für die beschriebene Klasse von Verbindungen sind (Dimethylphosphinylmethyl)-methyl-phosphinsäure ($n = 1$, $R^1 = CH_3$, $R^2 = CH_2$) oder (Methylphosphinyl-dimethylen)-dimethyl-diphosphinsäure ($n = 2$, $R^1 = CH_3$, $R^2 = CH_2$).

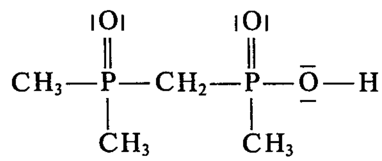

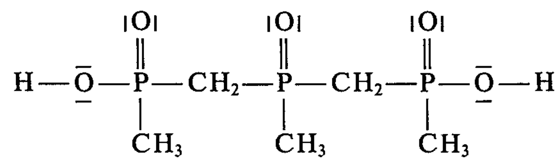

Die Phosphoncarbonsäureverbindungen nach der DE-OS 2 647 042, die durch die folgende allgemeine Formel (R = Alkyl von $C_1$ bis $C_{18}$, gegebenenfalls halogensubstituiert; H, Alkaliion oder Ammoniumion)

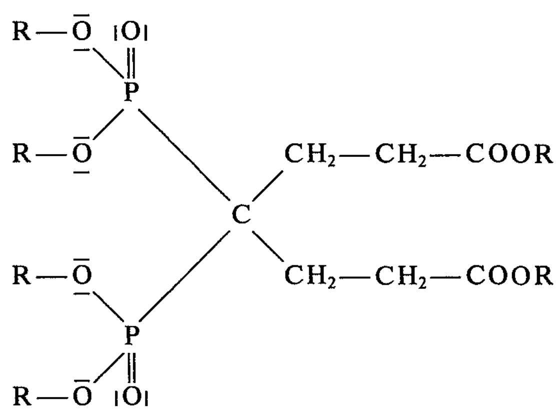

dargestellt werden, können aus den Methylen-diphosphonsäure-tetraalkylestern durch Umsetzung mit Acrylsäureestern im Molverhältnis von etwa 1 zu 2 in Gegenwart stark basischer Katalysatoren bei 0° bis 140°C und anschließende Umesterung oder Hydrolyse im Sauren oder Alkalischen hergestellt werden. Eines der Anwendungsgebiete für solche Phosphoncarbonsäureverbindungen, in denen R ausschließlich H, ein Alkali- und/oder Ammoniumion bedeutet, ist ihr Einsatz als Gipsabbindeverzögerer.

Aus der EP-OS 0 000 061 sind Phosphoncarbonsäureverbindungen bekannt, die u. a. durch die folgende allgemeine Formel ($R^1$ = H, Alkyl, Alkaliion oder Ammoniumion; $R^2$ = Alkyl)

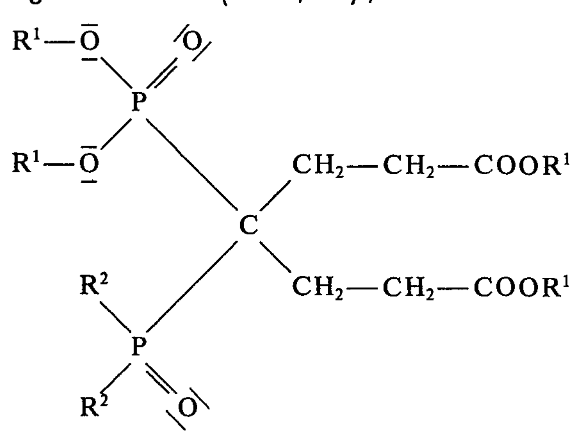

beschrieben werden; sie können aus den Dialkylphosphinyl-methanphosphonsäurediestern durch Umsetzung mit Acrylsäureestern in Gegenwart stark basischer Katalysatoren bei 0° bis 140°C und gegebenenfalls anschließende Umesterung oder Hydrolyse im Sauren oder Alkalischen hergestellt werden. Eines der Anwendungsgebiete für solche Phosphoncarbonsäureverbindungen, in denen $R^1$ ausschließlich H, ein Alkali- und/oder Ammoniumion bedeutet, ist ihr Einsatz als Gipsabbindeverzögerer.

Zu den im Stand der Technik konkret beschriebenen Dialkylphosphinyl-alkanphosphonsäuren zählen nur solche Verbindungen, bei denen die Alkylsubstituenten am Phosphinylrest mindestens 2 C-Atome haben, d. h. sie stellen mindestens eine Ethylgruppe dar und Verbindungen mit zwei Methylgruppen sind bis jetzt noch nicht bekanntgeworden. Außerdem weisen die bekannten Phosphoncarbonsäureverbindungen zwar eine bestimmte Verzögerung der Abbindegeschwindigkeit des Gipses auf, sie müssen jedoch verhältnismäßig umständlich aus den Phosphinyl-methanphosphonsäureester-Grundkörpern hergestellt werden.

Aufgabe der vorliegenden Erfindung ist es deshalb, Dimethylphosphinyl-alkanphosphonsäuren erstmals herzustellen. Diese Verbindungen sollen gegenüber den aus dem Stand der Technik bekannten Verbindungen insbesondere eine signifikante Verzögerung des Gipsabbindens bewirken und verglichen mit Verbindungen ähnlicher Struktur und ähnlicher Wirkung relativ einfacher herzustellen sein.

Die erfindungsgemäße Lösung dieser Aufgabe sind Dimethylphosphinyl-alkanphosphonsäuren der allgemeinen Formel I,

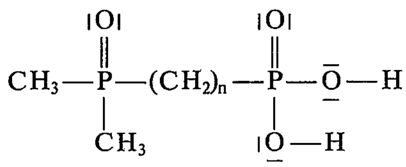

I

in der n = 1 oder 2 ist, insbesondere ist n = 1. Zu den Verbindungen der allgemeinen Formel I gehören die Dimethylphosphinyl-methanphosphonsäure und die Dimethylphosphinyl-ethanphosphonsäure.

Die erfindungsgemäßen Verbindungen lassen sich aus den Dimethylphosphinyl-alkanphosphonsäureestern der allgemeinen Formel II

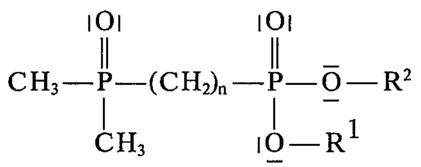

II

in der n = 1 oder 2 ist und $R^1$ und $R^2$ gleich oder verschieden sind und Alkylgruppen von $C_1$ bis $C_8$, bevorzugt von $C_1$ bis $C_3$, bedeuten, durch Acidolyse oder Hydrolyse herstellen. Diese Ester sind teilweise aus den zum Stand der Technik genannten Druckschriften bekannt oder können in Analogie zu den dort genannten Verfahren hergestellt werden. Die Acidolyse der Diester kann beispielsweise mit Chlorwasserstoff, gegebenenfalls in Anwesenheit von Wasser, erfolgen oder durch Umsetzung mit organischen Carbonsäuren in Gegenwart von Katalysatoren nach der Lehre der bereits zitierten DE-OS 2 719 385. Die Hydrolyse wird zweckmäßig nach den Verfahren der ebenfalls bereits zitierten DE-PS 2 441 783 (= US-PS 4 069 247) und 2 441 878 (= US-PS 4 069 245) durch Umsetzen mit Wasser ab einer Temperatur von etwa 160° C bis 170° C durchgeführt. Beispiele für Verbindungen der allgemeinen Formel II sind:

Dimethylphosphinyl-methanphosphonsäure-dimethyl-, -diethyl- und -diisopropylester,
2-Dimethylphosphinyl-ethanphosphonsäure-dimethyl-, -diethyl- und -di-n-propylester.

Die erfindungsgemäßen Dimethylphosphinyl-alkanphosphonsäuren finden bevorzugt Verwendung als Gipsabbindeverzögerer, insbesondere in einer Menge von 0,005 bis 0,5 Gew.-%, bevorzugt von 0,01 bis 0,1 Gew.-%, jeweils bezogen auf den Anteil Gips in gipshaltigen Gemischen bzw. bezogen auf reinen Gips. Unter dem Begriff »gipshaltige Gemische« sind dabei insbesondere Baugipssorten wie Stuckgips, Putzgips, Fertigputzgips, Haftputzgips, Maschinenputzgips, Ansetzgips, Fugengips oder Spachtelgips zu verstehen, die neben mindestens 50 Gew.-% dehydratisiertem Calciumsulfat-Dihydrat noch andere Komponenten wie Kalkhydrat, Stellmittel (d. h. Stoffe, welche die Eigenschaft des Gipses, zum Beispiel die Konsistenz, die Haftung oder die Versteifung beeinflussen) und Füllstoffe wie Sand oder Perlite enthalten können. Die erfindungsgemäßen Verbindungen zeigen gegenüber den bekannten in der Praxis bisher bevorzugt eingesetzten organischen Carbonsäuren eine signifikant höhere Abbindeverzögerung, dies gilt — bei vergleichbaren Mengen — auch gegenüber bekannten phosphororganischen Verbindungen. Sie sind darüber hinaus leichter als die für dieses Anwendungsgebiet bekannten Verbindungen synthetisierbar.

Beispiel 1

1.1 Herstellung des Dimethylphosphinyl-methanphosphonsäure-diethylesters:

252 g Chlormethyl-dimethyl-phosphinoxid werden unter Stickstoffatmosphäre auf 140° bis 150°C erhitzt, und es werden während 4 Stunden 480 g Triethylphosphit eingetropft. Während 1,5 Stunden wird bei der angegebenen Temperatur nachgerührt, wobei sich in einer der Apparatur nachgeschalteten Kühlfalle 98 g Ethylchlorid (76% d. Th.) ansammeln. Dann wird andestilliert bis zu einer Innentemperatur von 148°C bei einer Übergangstemperatur des Destillats von 135°C bei 80 Pa (0,6 Torr). Man erhält 309 g des Esters mit einem Erstarrungspunkt von 59–60°C (Ausbeute: 68% d. Th.). Das Produkt kann als Rohprodukt für weitere Umsetzungen eingesetzt werden, eine weitere Reinigung ist durch Destillation möglich ($Kp_{0,4}$: 140°C).

1.2 Herstellung der Dimethylphosphinyl-methanphosphonsäure
1.2.1 durch Acidolyse mit Salzsäure

309 g Dimethylphosphinyl-methanphosphonsäure-diethylester werden mit 618 g konz. Salzsäure versetzt, und das Gemisch wird ca. 15 Stunden bei 100°C gehalten, dabei wird gleichzeitig Chlorwasserstoffgas eingeleitet. Dann wird zunächst am Wasserstrahlvakuum bei 100°C abdestilliert, schließlich bei 133,3 Pa (1 Torr) bis zu einer Innentemperatur von 160°C. Der Rückstand beträgt 226 g (Ausbeute: 100% d. Th.), nach Umkristallisation aus Essigsäure hat das Produkt einen Fp. von 160° bis 161°C.

Analyse: $C_3H_{10}O_4P_2$ [172]

| | | | |
|---|---|---|---|
| ber.: | C 20,95%; | H 5,82%; | P 36,1% |
| gef.: | C 21,0%; | H 5,8%; | P 35,5% |

1.2.2 durch Acidolyse mit Essigsäure

280 g Dimethylphosphinyl-methanphosphonsäure-diethylester werden mit 50 g Eisessig und 5,6 g konz. Schwefelsäure versetzt, und das Gemisch wird auf 145° bis 155°C erhitzt. Während über eine Destillationskolonne Ethylacetat abdestilliert, werden im Verlauf von 10 Stunden weitere 230 g Eisessig eingetropft. Dann wird abgekühlt, die ausgefallenen Kristalle werden abgesaugt, das Filtrat wird eingeengt, und es wird erneut abgesaugt; man erhält 140 g (Ausbeute: 66,5% d. Th.) der Säure.

1.2.3 durch Hydrolyse mit Wasser

250 g Dimethylphosphinyl-methanphosphonsäure-diethylester werden mit 3 g Dimethylphosphinyl-methanphosphonsäure versetzt und auf 170°C erhitzt. Nun wird Wasser eingetropft, während über eine Kolonne Ethanol abdestilliert. Nach 6 Stunden sind ca. 95 g Ethanol, vermischt mit wenig Diethylester, abdestilliert. Man erhält 205 g des Produkts mit einem Wassergehalt von 6,35% (Ausbeute: 100% d. Th.). Nach Umkristallisation aus Essigsäure hat das Produkt einen Fp. von 157° bis 160°C.

Beispiel 2

2.1 Herstellung des 2-Dimethylphosphinyl-ethanphosphonsäure-dimethylesters

95 g Vinyl-dimethyl-phosphinoxid werden in Dioxan gelöst und mit Natriummethylatlösung alkalisch gestellt. Dazu werden in einer exothermen Reaktion 100 g Dimethylphosphit getropft. Anschließend wird fraktioniert destilliert, wobei man 104 g, $Kp_{0,4}$: 182°C (Ausbeute: 53% d. Th.) an Produkt erhält. In den Vorläufen der Destillation befinden sich nicht-umgesetztes Dimethylphosphit und Vinyl-dimethyl-phosphinoxid, die in einem weiteren Ansatz wiedereinsetzbar sind.

2.2 Herstellung der 2-Dimethylphosphinyl-ethanphosphonsäure durch Acidolyse mit Salzsäure

104 g des 2-Dimethylphosphinyl-ethanphosphonsäure-dimethylesters werden mit konz.

Salzsäure versetzt und das Gemisch wird bei 100° C gehalten, gleichzeitig wird Chlorwasserstoffgas durchgeleitet. Nach Beendigung der Reaktion wird am Wasserstrahlvakuum abdestilliert bis zu einer Innentemperatur von 130° C. Der kristalline Rückstand wird aus geringfügige Mengen an Wasser enthaltendem Ethanol umkristallisiert, wobei man 70 g des Produkts eines Fp. von 164° bis 166° C (Ausbeute: 77,5% d. Th.) erhält.

Analyse: $C_4H_{12}O_4P_2$ [186]

| | | | |
|---|---|---|---|
| ber.: | C 25,81%; | H 6,45%; | P 33,33% |
| gef.: | C 25,8%; | H 6,6%; | P 33,4% |

Beispiele 3 und 4 und Vergleichsbeispiele V1 bis V4

Die in der folgenden Tabelle angegebenen Werte von auf ihre Abbindezeit-Beeinflussung untersuchten Proben wurden nach der »Vicat«-Methode gemäß DIN 1168, Teil 2 (= »Prüfung mit dem Tauchkonus« unter 2.5.2) in der Ausgabe vom Juli 1975 bestimmt. Bei diesem Verfahren zur Bestimmung des Versteifungsbeginns von Gips enthaltenden Gemischen wird als Maß für den Versteifungsbeginn die Dauer in min bestimmt, nach der ein Tauchkonus beim Eindringen in eine Gipsprobe bei einer bestimmten Höhe steckenbleibt. Die Dauer wird vom Beginn des Einstreuens des Gemisches an gerechnet. Dazu werden die den Gips und den Abbindeverzögerer enthaltenden Proben mit Wasser im Verhältnis Probe zu Wasser wie 10 zu 6 knollenfrei vermischt. Das Ende der Versteifung (Abbindezeit) ist bei der Messung dann erreicht, wenn der Tachkonus nicht mehr in die Gipsprobe eindringt. Als Probe wird entweder Stuckgips (= Dehydrationsprodukt des Calciumsulfat-Dihydrats im Niedertemperaturbereich) = Typ 1 oder ein Gemisch aus 95 Gew.-% Stuckgips und 5 Gew.-% Kalkhydrat = Typ 2 eingesetzt.

Von den in den Vergleichsbeispielen V1 und V2 eingesetzten Verbindungen Citronensäure bzw. Weinsäure ist bekannt, daß sie bei Einsatz von Citronensäure in kalkhaltigen Gipsmassen (zum Beispiel Typ 2) bzw. von Weinsäure in nicht-kalkhaltigen Gipsmassen (zum Beispiel Typ 1) jeweils um bis zu etwa 50% niedrigere Abbindezeitwerte liefern als in dem jeweiligen Gegentyp. Sie wurden deshalb in der für sie vorteilhafteren Masse eingesetzt, und es wurde mit diesen relativ besseren Werten verglichen. Beide erfindungsgemäßen Dialkylphosphinyl-alkanphosphonsäuren sind im Gegensatz zu diesen organischen Carbonsäuren in beiden Gipsmasse-Typen mit gutem Erfolg einsetzbar. Auch die Vergleichsversuche gegenüber den bekannten strukturell vergleichbaren phosphororganischen Verbindungen (V3 und V4) zeigen, daß zumindest die in Beispiel 3 eingesetzte Dimethylphosphinylmethanphosphonsäure eine mindestens vergleichbare Verzögerungswirkung bei Einsatz von nur der Hälfte an zugesetzter Verzögerermenge ergibt.

| Beispiel bzw. Vergleichsbeispiel für den Abbindeverzögerer | Menge des Abbindeverzögerers in Gew.-% (bezogen auf Gipsmenge) | Abbindezeit in Gips des Typs 1 (min) | | Abbindezeit in Gips des Typs 2 (min) | |
|---|---|---|---|---|---|
| | | Beginn | Ende | Beginn | Ende |
| Dimethylphosphinyl-methanphosphonsäure (Bsp. 3) | 0,050 | nach 1.320 min noch nicht abgebunden | | nach 480 min noch nicht abgebunden | |
| | 0,025 | 315 | 330 | 154 | 168 |
| | 0,020 | 270 | 281 | 138 | 150 |
| 2-Dimethylphosphinylethanphosphonsäure (Bsp. 4) | 0,050 | 160 | 174 | 56 | 70 |
| Citronensäure*) (VI) | 0,100 | 205 | 225 | – | – |
| | 0,050 | 105 | 116 | – | – |
| Weinsäure*) (V2) | 0,050 | – | – | 173 | 253 |
| 3-Dimethylphosphinyl-3-phosphonopimelinsäure **) (V3) | 0,100 | nach 1.800 min noch nicht abgebunden | | – | – |
| | 0,050 | 330 | 360 | | |
| 3,3-Diphosphonopimelinsäure***) (V4) | 0,100 | nach 390 min noch nicht abgebunden | | – | – |
| | 0,075 | 185 | 200 | – | – |

*) Veröffentlicht in F. Graf und F. Rausch, Zement-Kalk-Gips (s. Einleitung), Werte wurden bei Versuchsreihe mitermittelt.
**) EP-OS 00 00 061, Werte der Tabelle auf Seite 27 entnommen.
***) DE-OS 26 47 042, Werte der Tabelle auf Seite 12 entnommen.

**Patentansprüche**

1. Dimethylphosphinyl-alkanphosphonsäuren der allgemeinen Formel I,

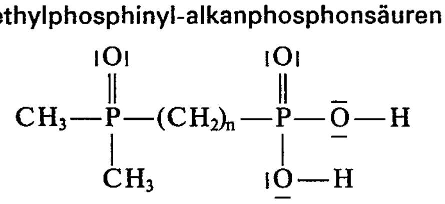

I

in der n = 1 oder 2 ist.

2. Verfahren zur Herstellung von Dimethylphosphinylalkanphosphonsäuren nach Anspruch 1, dadurch gekennzeichnet, daß Dimethylphosphinyl-alkanphosphonsäurediester der allgemeinen Formel II

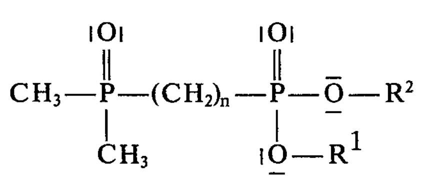

II

in der n=1 oder 2 ist und $R^1$ und $R^2$ gleich oder verschieden sind und Alkylgruppen von $C_1$ bis $C_8$

bedeuten, der gegebenenfalls sauren Hydrolyse unterworfen werden.

3. Verfahren nach Anspruch 2, dadurch gekennzeichnet, daß in der allgemeinen Formel II $R^1$ und $R^2$ Alkylgruppen von $C_1$ bis $C_3$ bedeuten.

4. Verwendung von Dimethylphosphinyl-alkanphosphonsäuren nach Anspruch 1 als Gipsabbindeverzögerer.

## Claims

1. Dimethylphosphinylalkanephosphonic acids of the general formula I

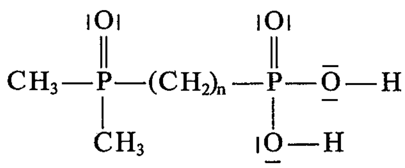

in which n is 1 or 2.

2. A process for the preparation of dimethylphosphinylalkanephosphonic acids as claimed in claim 1, characterized in that dimethylphosphinylalkanephosphonic acid diesters of the general formula II

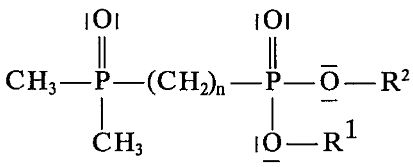

in which n is 1 or 2 and $R^1$ and $R^2$ are identical or different and denote $C_1$ to $C_8$ alkyl groups, are subjected to hydrolysis under optionally acid conditions.

3. A process as claimed in claim 2, characterized in that $R^1$ and $R^2$ in the general formula II denote $C_1$ to $C_3$ alkyl groups.

4. Use of dimethylphosphinylalkanephosphonic acids as claimed in claim 1 as setting retarders for gypsum.

## Revendications

1. Acides diméthylphosphinyl-alcanephosphoniques de formule générale I

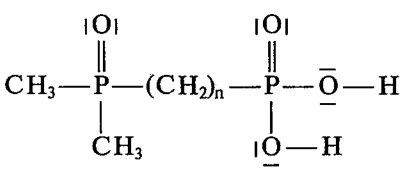

(I)

dans laquelle n = 1 ou 2.

2. Procédé de fabrication d'acides diméthylphosphinylalcane-phosphoniques selon la revendication 1, caractérisé en ce que l'on soumet des diesters d'acide diméthylphosphinyl-alcanephosphonique de formule générale II

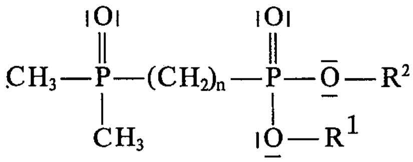

(II)

dans laquelle n = 1 ou 2 et $R^1$ et $R^2$ sont identiques ou différents et représentent des groupes alkyle de $C_1$ à $C_8$, à une hydrolyse, éventuellement en milieu acide.

3. Procédé selon la revendication 2, caractérisé en ce que dans la formule générale II $R^1$ et $R^2$ sont des groupes alkyle de $C_1$ à $C_3$.

4. Utilisation d'acides diméthylphosphinyl-alcane-phosphoniques selon la revendication 1 comme retardateur de prise dans les plâtres.